# FASCICULE DE BREVET EUROPEEN

(11) **EP 3 775 624 B1**
(45) Date de publication et mention de la délivrance du brevet: **09.02.2022**
(21) Numéro de dépôt: 19715958.5
(22) Date de dépôt: 11.04.2019
(51) Int. Cl.: F16H 57/04

(54) **ACTIONNEUR INCLUANT UN SYSTEME DE LUBRIFICATION INTEGRE**
STELLANTRIEB MIT EINGEBAUTEM SCHMIERSYSTEM
ACTUATOR COMPRISING A BUILT-IN LUBRICATING SYSTEM

(30) Priorité: 11.04.2018 FR 1853163
(43) Date de publication de la demande: 17.02.2021
(73) Titulaire: Safran Data Systems, 91978 Courtaboeuf Cedex (FR)
(72) Inventeur: HOUDARD, Hervé, 33260 La-Teste-De-Buch (FR); MÉGARD, Thomas, 71960 La-Roche-Vineuse (FR)
(74) Mandataire: Regimbeau
(86) Numéro de dépôt international: PCT/EP2019/059315
(87) Numéro de publication internationale: WO 2019/197559

(56) Documents cités:
- DE-A1- 10 235 078
- FR-A- 656 978
- JP-A- H06 159 471
- JP-A- 2010 190 307

## Description

### DOMAINE DE L'INVENTION

L'invention concerne le domaine des actionneurs de type vis-écrou.

L'invention concerne plus particulièrement un actionneur, tel que par exemple un actionneur destiné à être utilisé pour déplacer une antenne de télécommunication, incluant un système de lubrification intégré.

### ETAT DE LA TECHNIQUE

Les antennes de télécommunication satellite sont généralement supportées par des dispositifs de positionnement qui permettent d'orienter l'antenne pour la diriger vers la cible visée. Ces dispositifs de positionnement incluent généralement plusieurs actionneurs (ou vérins) de positionnement qui sont pilotés pour déplacer l'antenne vers la position souhaitée.

Les actionneurs (ou vérins) utilisés dans de tels dispositifs sont généralement des actionneurs de type vis-écrou. Un actionneur de type vis-écrou comprend une vis et un écrou, l'écrou étant propre à coopérer avec la vis de sorte qu'une rotation de la vis provoque une translation de l'écrou par rapport à la vis.

Afin de garantir une bonne précision de positionnement de l'antenne, ces actionneurs doivent à la fois être rapides et présenter un très faible jeu. Il en résulte que ces actionneurs nécessitent d'être lubrifiés pendant leur fonctionnement.

A cet effet, une solution connue consiste à prévoir un réservoir de fluide de lubrification monté solidaire de l'écrou. Le fluide de lubrification s'écoule progressivement depuis le réservoir et circule de haut en bas à l'intérieur de l'actionneur par gravité. Dans certaines applications, cette circulation de fluide de lubrification participe également au refroidissement de l'actionneur. Une fois que le fluide de lubrification a atteint le bas de l'actionneur, ce fluide n'est pas recyclé. Il est donc nécessaire de recharger régulièrement de réservoir en fluide de lubrification. De plus, un tel actionneur présente une course utile réduite.

Une autre solution connue consiste à prévoir une « bâche à huile » située en bas de l'actionneur. La bâche à huile est un réservoir de volume contrôlé contenant du fluide de lubrification et dans lequel l'écrou peut être plongé. Lors de la descente de l'écrou le long de la vis, l'écrou pénètre dans le volume de fluide de lubrification. La pression générée par cette pénétration impose une remontée du niveau de fluide de lubrification dans l'écrou. La lubrification se fait ainsi par emport de fluide par l'écrou. Cependant, dans ce cas, le fonctionnement de l'actionneur doit être interrompu régulièrement afin de mettre l'écrou en position de mouillage dans le fluide de lubrification.

Pour pallier ces inconvénients, une autre solution consiste à doter l'actionneur d'un système de lubrification comprenant une pompe localisée à l'extérieur de l'actionneur, la pompe étant reliée à un circuit d'injection et à un circuit de récupération pour faire circuler le fluide de lubrification à l'intérieur de l'actionneur.

Toutefois, même si une seule pompe peut être prévue pour alimenter plusieurs actionneurs en parallèle, un tel système reste complexe, volumineux et coûteux.

En outre, un tel système inclut nécessairement des raccords hydrauliques, ce qui engendre des risques de fuite, et par conséquent une consommation importante en fluide de lubrification.

Le document DE 102 35 078 décrit un moteur axial destiné notamment à être utilisé dans un robot pistolet de soudage. Le moteur axial comprend une tige filetée et un écrou propre à coopérer avec la tige filetée, de sorte qu'une rotation de l'écrou entraine une translation de la tige filetée. La tige filetée contient un réservoir de graisse et des canaux internes permettant d'acheminer la graisse jusqu'aux surfaces filetées de la tige et de l'écrou.

### RESUME DE L'INVENTION

Un but de l'invention est de proposer une solution pour lubrifier un actionneur, qui permette un recyclage du fluide de lubrification, tout en étant moins complexe qu'un système incluant une pompe externe.

Ce but est atteint dans le cadre de la présente invention grâce à un actionneur comprenant :
- un corps,
- un premier élément monté mobile en rotation par rapport au corps, et un deuxième élément monté mobile en translation par rapport au corps, l'un du premier élément et du deuxième élément étant une vis et l'autre du premier élément et du deuxième élément étant un écrou, l'écrou étant propre à coopérer avec la vis de sorte qu'une rotation du premier élément par rapport au corps autour d'un axe de rotation entraine une translation du deuxième élément par rapport au corps parallèlement à l'axe de rotation,
- un cylindre fixe par rapport au premier élément,
- un piston monté mobile en translation à l'intérieur du cylindre entre une première position extrême et une deuxième position extrême,
- une surface de came fixe par rapport au corps et contre laquelle le piston est maintenu en appui de sorte qu'une rotation du premier élément par rapport au corps entraine un mouvement de va-et-vient en translation du piston entre la première position extrême et la deuxième position extrême.

Dans un tel actionneur, c'est la rotation du premier élément qui entraine le mouvement de va-et-vient du piston dans le cylindre, ce qui permet la mise en circulation du fluide de lubrification à l'intérieur de l'actionneur. Un tel actionneur ne nécessite donc pas de pompe externe, ni de circuit d'injection ou de récupération pour relier la pompe à l'actionneur.

Cela permet de limiter les risques de fuite, et de réduire la consommation en fluide de lubrification.

Le volume de fluide lubrification utilisé peut être restreint.

De plus, comme l'actionneur incorpore un système de lubrification intégré, il n'est pas sujet à des modes de défaillance de systèmes externes à l'actionneur

En outre, une telle solution présente un encombrement réduit.

L'actionneur peut en outre présenter les caractéristiques suivantes :
- l'actionneur comprend un conduit d'aspiration formé dans le premier élément et propre à alimenter le cylindre en fluide de lubrification, et une soupape d'aspiration propre à autoriser une circulation de fluide de lubrification dans le conduit d'aspiration vers le cylindre lorsque le piston est déplacé de la première position extrême à la deuxième position extrême, et à interdire une circulation de fluide de lubrification dans le conduit d'aspiration lorsque le piston est déplacé de la deuxième position extrême vers la première position extrême ;
- l'actionneur comprend un conduit de refoulement formé dans le premier élément et propre à évacuer le fluide de lubrification depuis le cylindre, et une soupape de refoulement propre à autoriser une circulation de fluide de lubrification dans le conduit de refoulement depuis le cylindre lorsque le piston est déplacé de la deuxième position extrême à la première position extrême, et à interdire une circulation de fluide de lubrification dans le conduit de refoulement lorsque le piston est déplacé de la première position extrême vers la deuxième position extrême ;
- l'actionneur comprend un organe élastique de rappel propre à solliciter le piston pour maintenir le piston en appui sur la surface de came,
- l'organe élastique de rappel comprend un ressort ;
- le piston est monté mobile en translation à l'intérieur du cylindre selon une direction radiale par rapport à l'axe de rotation du premier élément ;
- la surface de came présente un rayon qui varie angulairement, avec au moins un maximum ;
- la surface de came présente un rayon qui varie angulairement, avec au moins deux maxima ;
- la surface de came présente une section de forme elliptique ;
- l'actionneur comprend un nombre p de pistons et la came présente un rayon qui varie angulairement avec n x p maxima, n étant un nombre entier supérieur ou égal à 1 ;
- le premier élément comprend un canal de circulation de fluide de lubrification s'étendant à l'intérieur du premier élément, le déplacement du piston dans le cylindre ayant pour effet de faire circuler le fluide de lubrification dans le canal de circulation de fluide ;
- l'actionneur comprend un réservoir de fluide de lubrification agencé à l'intérieur du corps, pour l'alimentation en fluide de lubrification du canal de circulation de fluide de lubrification ;
- l'actionneur comprend un passage de retour de fluide entre le premier élément et le deuxième élément pour le retour du fluide de lubrification vers le réservoir.

### PRESENTATION DES DESSINS

D'autres caractéristiques et avantages ressortiront encore de la description qui suit, laquelle est purement illustrative, et non limitative, et doit être lue en regard des dessins annexés, parmi lesquels :
- la figure 1 représente de manière schématique, en coupe longitudinale, un actionneur conforme à un mode de réalisation de l'invention,
- la figure 2 représente de manière schématique, en coupe A-A, l'actionneur de la figure 1,
- la figure 3 est une vue agrandie, en coupe longitudinale de la chambre de pompage de l'actionneur,
- les figures 4 et 5 représentent de manière schématique l'actionneur, en coupe A-A, lorsque la vis est dans une première position angulaire à 0°, et lorsque la vis est dans une deuxième position angulaire à 90°, respectivement,
- la figure 6 représente de manière schématique le trajet du fluide de lubrification à l'intérieur de l'actionneur.

### DESCRIPTION DETAILLEE D'UN MODE DE REALISATION

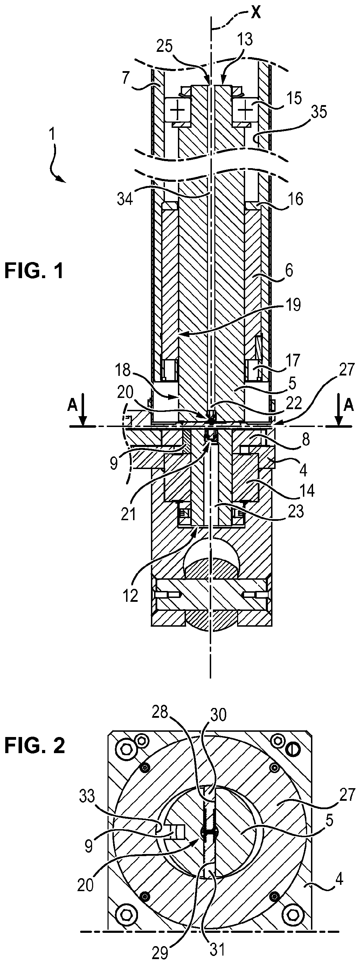

Sur les figures 1 à 6, l'actionneur 1 comprend une première extrémité 2 (ou extrémité inférieure) destinée par exemple à être raccordée à une plateforme fixée au sol, et une deuxième extrémité 3 (ou extrémité supérieure) destiné par exemple à être raccordée à une plateforme mobile sur laquelle est fixée une antenne de télécommunication.

L'actionneur 1 comprend un corps 4, une vis 5, un écrou 6 et un tube d'actionneur 7.

La vis 5 présente un axe longitudinal X. La vis 5 est propre à être entrainée en rotation par rapport au corps 4 autour de l'axe X. A cet effet, l'actionneur 1 comprend un pignon d'entrainement 8 monté fixe en rotation sur la vis 5 par l'intermédiaire d'une clavette 9. Le pignon d'entrainement 8 est propre à engrener avec un pignon intermédiaire 10. Le pignon d'entrainement 8 peut ainsi être entrainé en rotation par un moteur électrique 11, via le pignon intermédiaire 10.

La vis 5 présente une première extrémité 12 (ou extrémité inférieure) et une deuxième extrémité 13 (ou extrémité supérieure). La vis 5 est guidée en rotation par rapport au corps 4 par l'intermédiaire d'un premier palier 14 (ou palier inférieur) situé à proximité de la première extrémité 12 de la vis 5. Dans le mode de réalisation illustré sur les figures 1 à 6, la vis est également guidée en rotation par rapport au corps 4 par l'intermédiaire d'un deuxième palier 15 (ou palier supérieur) situé à proximité de la deuxième extrémité 13 de la vis 5. Le deuxième palier 15 est optionnel, il évite un battement de la vis 5 lorsque celle-ci est entrainée en rotation à une vitesse élevée. Le premier palier 14 est monté entre la vis 5 et le corps 4. Le deuxième palier 15 est monté entre la vis 5 et le tube d'actionneur 7. Le deuxième palier 15 est monté glissant par rapport au tube d'actionneur 7. Plus précisément, le deuxième palier 15 est propre à glisser sur une surface interne 35 du tube d'actionneur. Le premier palier 14 et le deuxième palier 15 peuvent comprendre des roulements à billes.

L'écrou 6 entoure la vis 5. L'écrou 6 est monté fixe dans le tube d'actionneur 7 par le biais d'une butée 16 et d'un écrou de fixation 17.

L'écrou 6 est propre à coopérer avec la vis 5, de sorte qu'une rotation de la vis 5 autour de l'axe X entraine concomitamment une translation de l'écrou 6 le long de la vis 5 parallèlement à l'axe X. A cet effet, la vis 5 peut présenter une surface externe 18 cylindrique dans laquelle sont ménagées des gorges hélicoïdales tandis que l'écrou 6 peut présenter une surface interne 19 cylindrique dans laquelle sont ménagées des gorges hélicoïdales qui sont propres à coopérer avec les gorges hélicoïdales de la vis 5 pour convertir une rotation de la vis 5 en une translation de l'écrou 6. Les gorges hélicoïdales de la vis 5 peuvent coopérer avec les gorges hélicoïdales de l'écrou 6 par l'intermédiaire de billes ou de rouleaux, avec ou sans circulation des billes ou des rouleaux. Les jeux entre la surface externe 18 de la vis 5 et la surface interne 19 de l'écrou 6 permettent une circulation de fluide de lubrification entre la vis 5 et l'écrou 6.

La vis 5 comprend une chambre de pompage 20, un conduit d'aspiration 21, un conduit de refoulement 22 et un réservoir 23.

La chambre de pompage 20 est située à l'intérieur de la vis 5, entre la première extrémité 12 de la vis 5 et la deuxième extrémité 13 de la vis 5.

Le conduit d'aspiration 21 et le conduit de refoulement 22 sont formés par un canal longitudinal central 34 s'étendant à l'intérieur de la vis 5, le long de l'axe X. De même, le réservoir 23 est formé par un alésage ménagé à la première extrémité 12 de la vis 5.

Le réservoir 23 est en communication avec le fond du corps 4 de l'actionneur, entre l'extrémité inférieure 12 de la vis 5 et le corps 4.

Le conduit d'aspiration 21 relie le réservoir 23 à la chambre de pompage 20. L'actionneur 1 comprend en outre une première soupape 24 (ou soupape d'aspiration) située dans le conduit d'aspiration 21. La première soupape 24 autorise une circulation de fluide dans le conduit d'aspiration 21 uniquement dans un sens de circulation allant du réservoir 23 vers la chambre de pompage 20.

Le conduit de refoulement 22 s'étend depuis la chambre de pompage 20 jusqu'à la deuxième extrémité 13 de la vis 5. Dans le mode de réalisation illustré sur les figures 1 à 3, le conduit de refoulement 22 débouche à l'extérieur de la vis 5 par un orifice de sortie 25 situé à la deuxième extrémité 13 de la vis 5. L'actionneur 1 comprend en outre une deuxième soupape 26 (ou soupape de refoulement) située dans le conduit de refoulement 22. La deuxième soupape 26 autorise une circulation de fluide dans le conduit de refoulement 22 uniquement dans un sens de circulation allant de la chambre de pompage 20 vers l'orifice de sortie 25 de la vis 5.

Par ailleurs, l'actionneur 1 comprend, dans le mode de réalisation illustré, une came 27, deux cylindres 28, 29, deux pistons 30, 31 et un organe élastique de rappel 32.

La came 27 entoure la vis 5. La came 27 présente une forme générale de disque annulaire. La came 27 est montée fixe sur le corps 4.

Comme visible sur la figure 2, la came 27 présente une surface de came 33 formée par une surface interne de la came 27, qui entoure la vis 5. La surface de came 33 présente une section transversale (selon un plan orthogonal à l'axe X) non-circulaire. Plus précisément, la surface de came 33 présente un rayon qui varie angulairement.

Dans le mode de réalisation illustré sur cette figure, la surface de came 33 présente une section transversale de forme elliptique, avec un grand axe et un petit axe, le petit axe étant perpendiculaire au grand axe. Dans ce mode de réalisation, la surface de came 33 présente ainsi un rayon qui varie angulairement avec deux maxima, situés sur le grand axe de l'ellipse, et deux minima, situés sur le petit axe de l'ellipse.

Chaque cylindre 28, 29 est formé par un orifice radial ménagé dans la vis 5. Dans le mode de réalisation illustré sur la figure 2, les orifices radiaux sont alignés l'un avec l'autre le long d'un diamètre de la vis 5.

Chaque piston 30, 31 est reçu dans un cylindre 28, 29 respectif. Chaque piston 30, 31 est monté mobile en translation à l'intérieur du cylindre 28, 29 le long d'une direction radiale par rapport à l'axe X.

L'organe élastique de rappel 32 est disposé entre les deux pistons 30 et 31. L'organe élastique de rappel 32 exerce une force de rappel qui sollicite chaque piston 30, 31 selon une direction radiale, vers la surface de came 33. Autrement dit, l'organe élastique de rappel 32 exerce sur les pistons 30 et 31 une force de rappel qui tend à éloigner les pistons 30 et 31 l'un de l'autre, de manière à maintenir chaque piston 30, 31 en contact avec la surface de came 33.

L'organe élastique de rappel 32 peut comprendre un ressort, tel qu'un ressort hélicoïdal par exemple.

Lorsque l'actionneur 1 est en fonctionnement, la vis 5 est entrainée en rotation par rapport au corps 4 autour de l'axe X par le moteur électrique 11 via le pignon intermédiaire 10 et le pignon d'entrainement 8.

La rotation de la vis 5 par rapport au corps 4 entraine concomitamment un déplacement en translation de l'écrou 5 par rapport au corps 4 parallèlement à l'axe X. L'écrou 5 étant solidaire du tube d'actionneur 7, le tube d'actionneur 7 est déplacé en translation par rapport au corps 4, simultanément avec l'écrou 5, parallèlement à l'axe X. Lors du déplacement en translation du tube d'actionneur 7, le deuxième palier 15 (ou palier supérieur) glisse sur la surface interne 35 du tube d'actionneur 7.

La came 27 étant montée fixe sur le corps 4, la vis 5 est également entrainée en rotation par rapport à la came 27.

La vis 5 étant entrainée en rotation par rapport à la came 27, les pistons 30 et 31 sont également entrainés en rotation par rapport à la came 27. Comme les pistons 30 et 31 sont maintenus en appui contre la surface de came 33 par l'élément élastique de rappel 32, les pistons 30 et 31 glissent sur la surface de came 33. Du fait de la forme non-circulaire de la surface de came 33, les pistons 30 et 31 sont entrainés en translation à l'intérieur des cylindres 28 et 29 selon un mouvement de va-et-vient.

Comme les pistons 30 et 31 sont entrainés simultanément selon des sens opposés de déplacement, le mouvement de va-et-vient des pistons 30 et 31 a pour effet de faire varier le volume de la chambre de pompage 20.

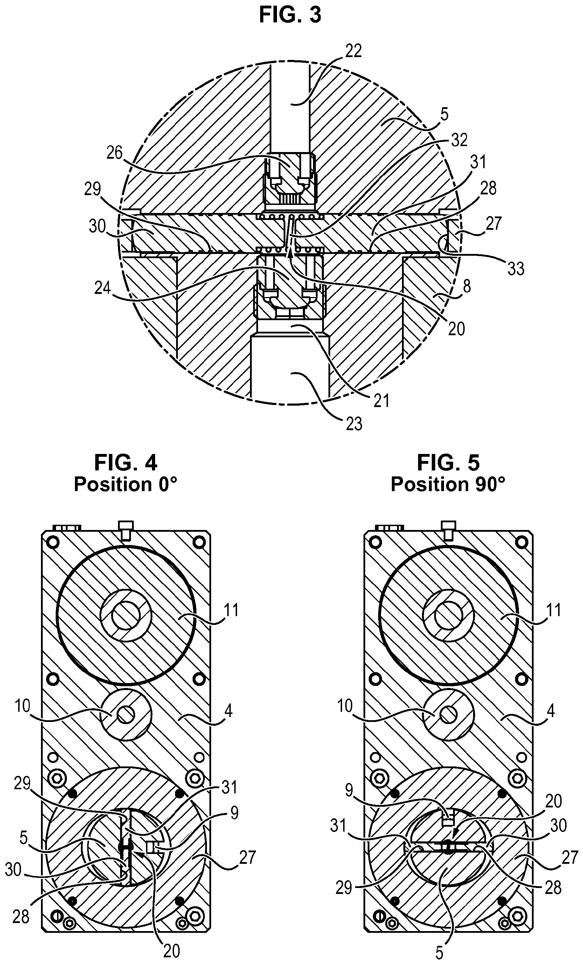

Sur la figure 4, la vis 5 est dans une première position angulaire à 0°. Dans cette première position angulaire de la vis 5, les pistons 30 et 31 se trouvent en appui contre la surface de came 33, aux endroits où la surface de came 33 présente le plus petit rayon. Les pistons 30 et 31 se trouvent donc simultanément dans une première position extrême (position rapprochée). Dans cette première position extrême, la chambre de pompage 20 délimitée par les pistons 30 et 31, présente un volume minimal.

Sur la figure 5, la vis 5 est dans une deuxième position angulaire à 90°, par rapport à la première position angulaire. Dans cette deuxième position angulaire de la vis 5, les pistons 30 et 31 se trouvent en appui contre la surface de came 27, aux endroits où la surface de came 27 présente le plus grand rayon. Les pistons 30 et 31 se trouvent donc simultanément dans une deuxième position extrême (position écartée). Dans cette deuxième position extrême, la chambre de pompage 20 délimitée par les pistons 30 et 31 présente un volume maximal.

Ainsi, les pistons 30 et 31 sont déplacés simultanément entre la première position extrême et la deuxième position extrême, de sorte que le volume de la chambre de pompage 20 passe successivement d'un volume minimal à un volume maximal, puis d'un volume maximal à un volume minimal.

Lors d'une première phase, le déplacement des pistons 30 et 31 de la première position extrême vers la deuxième position extrême a pour effet d'augmenter le volume de la chambre de pompage 20 et par conséquent de créer une dépression dans la chambre de pompage 20. La première soupape 24 s'ouvre et autorise une circulation du fluide de lubrification depuis le réservoir 23 vers la chambre de pompage 20 via le conduit d'aspiration 21. En revanche, la deuxième soupape 26 se ferme et interdit une circulation de fluide de lubrification depuis la chambre de pompage 20 vers le conduit de refoulement 22. De cette manière, du fluide de lubrification est prélevé du réservoir 23 et injecté dans la chambre de pompage 20.

Lors d'une deuxième phase, le déplacement des pistons 30 et 31 de la deuxième position extrême vers la première position extrême a pour effet de diminuer le volume de la chambre de pompage 20 et par conséquent de créer une surpression dans la chambre de pompage 20. La deuxième soupape 26 s'ouvre et autorise une circulation du fluide de lubrification depuis la chambre de pompage 20 vers le conduit de refoulement 22. En revanche, la première soupape 24 se ferme et interdit une circulation de fluide de lubrification depuis la chambre 20 vers le conduit d'aspiration 21. De cette manière, du fluide de lubrification de la chambre de pompage 20 est injecté vers le conduit de refoulement 22.

Tant que la vis 5 est entrainée en rotation par rapport au corps 4, les pistons 30 et 31 sont animés d'un mouvement de va-et-vient à l'intérieur des cylindres 28 et 29, ce qui a pour effet de mettre en circulation le fluide de lubrification à l'intérieur de l'actionneur.

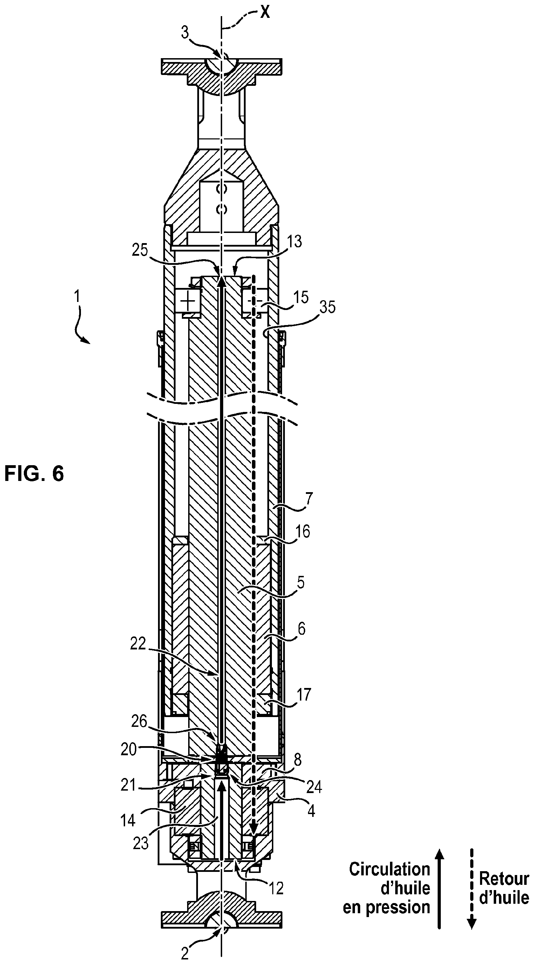

Comme illustré sur la figure 6, le fluide de lubrification circule à l'intérieur de la vis 5, via le conduit de refoulement 22. Le fluide de lubrification circule le long de l'axe X dans un sens allant de la première extrémité 12 de la vis 5 vers la deuxième extrémité 13 de la vis 5.

Une fois que le fluide de lubrification a atteint la deuxième extrémité 13 de la vis 5, il sort de la vis 5 via l'orifice de sortie 25 et circule le long de la surface externe 18 de la vis 5, entre le tube d'actionneur 7 et la vis 5. Le fluide de lubrification circule le long de l'axe X dans un sens allant de la deuxième extrémité 13 de la vis 5 vers la première extrémité 12 de la vis 5. Le fluide de lubrification passe à travers le deuxième palier 15 et sur la surface interne 35 du tube d'actionneur 7, puis entre la vis 5 et l'écrou 6, puis entre la surface de came 33 et la vis 5, puis entre les dents du pignon d'entrainement 8, puis à l'intérieur du premier palier 14. Le fluide de lubrification retourne ensuite dans le réservoir 23. De cette manière, le fluide de lubrification est recyclé.

Le débit de circulation du fluide de lubrification est proportionnel à la vitesse de rotation de la vis 5. En revanche, le sens de circulation du fluide de lubrification est indépendant du sens de rotation de la vis 5. Le sens de circulation du fluide de lubrification est le même, quel que soit le sens de rotation de la vis 5 par rapport au corps 4. De cette manière, une lubrification de l'actionneur 1 est obtenue quel que soit le sens de déplacement de l'actionneur 1 (i.e. lorsque l'actionneur se déploie et lorsque l'actionneur se rétracte).

L'actionneur 1 proposé permet de recycler le fluide de lubrification sans l'aide d'une pompe externe.

De plus, en choisissant des pistons 30, 31 et des soupapes 24, 26 hermétiques ou avec de faibles pertes, un amorçage et une circulation du fluide de lubrification peuvent être obtenus même en présence d'air dans le circuit.

L'actionneur 1 peut en outre comprendre un orifice de remplissage disposé en partie haute de l'actionneur 1 afin d'absorber les variations de volume de la chambre de pompage 20 ou lors de vidanges ou lors de phases de transport et d'installation de l'actionneur 1.

Un diamètre réduit en partie supérieur (ajutage) permet de gérer le volume mort dans le tube d'actionneur 7. Le diamètre plus important en bas du conduit de refoulement 22 facilite l'amorçage.

Par ailleurs, l'actionneur 1 peut être facilement vidangé par gravité.

A cet effet, le réservoir 23 est vidé en ôtant un bouchon de vidange situé en partie basse du corps 4 de l'actionneur 1. Ce bouchon comprend un aimant qui récupère les éventuelles particules métalliques dans l'huile. Cet aimant est nettoyable en maintenance.

Le réservoir 23 peut être équipé de filtres en entrée.

Dans les cas d'utilisation intensive, le refroidissement de la vis 5 limite le serrage de la vis 5 et de l'écrou 6, et donc leur échauffement.

Un système de chauffage par plongeur dans la chambre de pompage 20 peut être prévu pour chauffer le fluide de lubrification et ainsi limiter les frottements en départ à froid. La circulation d'un fluide de lubrification réchauffé améliore le rendement de l'actionneur 1 à très basse température.

Le dépôt d'un film de fluide de lubrification, sur toute les parties mobiles ou frottantes de l'actionneur 1, limite la corrosion dans les cas de stockage prolongé entre deux fonctionnements.

Dans le mode de réalisation qui vient d'être décrit, l'actionneur comprend une vis et un écrou propre à coopérer avec la vis par le biais de billes. Cependant, l'invention s'applique plus généralement à d'autres actionneurs de type vis-écrou, par exemple dans lesquels l'écrou coopère avec la vis par le biais de surfaces filetées ou par le biais d'éléments roulants, tels que des billes ou des rouleaux, avec ou sans recirculation des billes ou des rouleaux.

Dans le mode de réalisation décrit précédemment, l'élément monté mobile en rotation par rapport au corps 4 est une vis 5 et l'élément monté mobile en translation par rapport au corps 4 est un écrou 6. Toutefois, l'invention s'applique également au cas où l'élément monté mobile en rotation par rapport au corps est un écrou et l'élément monté mobile en translation par rapport au corps est une vis.

La circulation du fluide de lubrification permet en outre un refroidissement et/ou une homogénéisation thermique de l'actionneur, y compris dans le cas d'un actionneur dans lequel le fluide de lubrification est chauffé (cas par exemple des actionneurs installés dans un environnement où la température est basse).

Dans le mode de réalisation décrit précédemment, l'actionneur 1 comprend deux pistons 30 et 31 et deux cylindres 28 et 29. Toutefois, l'actionneur pourrait comprendre un nombre p quelconque de pistons et un nombre p de cylindres, par exemple un nombre p différent de 2. Dans ce cas, la came 33 présente un rayon qui varie angulairement avec n x p maxima, n étant un nombre entier supérieur ou égal à 1.

Par exemple pour p=1 et n= 1, l'actionneur comprend un seul piston, un ressort et une came présentant un rayon qui varie angulairement avec un seul minima et un seul maxima (par exemple une surface de came présentant une forme circulaire excentré par rapport à l'axe de rotation X).

Le nombre d'éléments élastiques est adapté au nombre p de pistons. Ces éléments élastiques peuvent être reliés à une pièce centrale fixe (par exemple fixée sur une partie fixe de la soupape de refoulement 26). Les éléments élastiques disposés entre deux pistons radialement alignés peuvent être monobloc, comme dans le mode de réalisation décrits précédemment.

Dans le cas où l'actionneur comprend une pluralité de pistons (p≥1), les pistons sont régulièrement répartis angulairement autour de l'axe X.

L'actionneur peut inclure plusieurs étages de pompe. Ces étages de pompe sont soit synchrones (les volumes des chambres de pompage 20 atteignant leur maximum et minimum simultanément, grâce à des maxima et minima de rayon de la surface de came 33 aux mêmes angles autour de l'axe X), soit asynchrones (les volumes des chambres de pompage 20 atteignant leurs minima et maxima à des instants décalés dans le temps).

Les étages de pompe peuvent être montés en série ou en parallèle. Dans le cas d'un montage en parallèle, les conduits de refoulement des différents étages de pompe débouchent en parallèle dans le conduit de refoulement 22. Le nombre de soupapes est adapté en fonction des cas.

La soupape de refoulement peut être constituée d'un clapet anti-retour ou d'un diaphragme à perte de charge.

Dans le mode de réalisation décrit précédemment, les pistons 30 et 31 sont mobile selon une direction radiale par rapport à l'axe X. Toutefois, il serait possible de concevoir un actionneur dans lequel les pistons seraient mobiles parallèlement à l'axe X. Dans ce cas, les pistons seraient maintenus en appui sur une came à l'extrémité de la vis 5 et répartis autour du réservoir 23et la came 27 est réalisée dans le carter 4 à l'extrémité 12 de la vis 5.

## Revendications

1. Actionneur (1) comprenant :
- un corps (4), et
- un premier élément (5) monté mobile en rotation par rapport au corps (4), et un deuxième élément (6) monté mobile en translation par rapport au corps (4), l'un du premier élément (5) et du deuxième élément (6) étant une vis et l'autre du premier élément (5) et du deuxième élément (6) étant un écrou, l'écrou étant propre à coopérer avec la vis de sorte qu'une rotation du premier élément (5) par rapport au corps (4) autour d'un axe de rotation (X) entraine une translation du deuxième élément (6) par rapport au corps (4) parallèlement à l'axe de rotation (X),
**caractérisé en ce qu'**il comprend en outre
- un cylindre (28, 29) fixe par rapport au premier élément (5),
- un piston (30, 31) monté mobile en translation à l'intérieur du cylindre (28, 29) entre une première position extrême et une deuxième position extrême, et
- une surface de came (33) fixe par rapport au corps (4) et contre laquelle le piston (30, 31) est maintenu en appui de sorte qu'une rotation du premier élément (5) par rapport au corps (4) entraine un mouvement de va-et-vient en translation du piston (30, 31) entre la première position extrême et la deuxième position extrême.

2. Actionneur selon la revendication 1, comprenant un conduit d'aspiration (21) formé dans le premier élément (5) et propre à alimenter le cylindre (28, 29) en fluide de lubrification, et une soupape d'aspiration (24) propre à autoriser une circulation de fluide de lubrification dans le conduit d'aspiration (21) vers le cylindre (28, 29) lorsque le piston (30, 31) est déplacé de la première position extrême à la deuxième position extrême, et à interdire une circulation de fluide de lubrification dans le conduit d'aspiration (21) lorsque le piston (30, 31) est déplacé de la deuxième position extrême vers la première position extrême.

3. Actionneur selon l'une des revendications 1 et 2, comprenant un conduit de refoulement (22) formé dans le premier élément (5) et propre à évacuer le fluide de lubrification depuis le cylindre (28, 29), et une soupape de refoulement (26) propre à autoriser une circulation de fluide de lubrification dans le conduit de refoulement (22) depuis le cylindre (28, 29) lorsque le piston (30, 31) est déplacé de la deuxième position extrême à la première position extrême, et à interdire une circulation de fluide de lubrification dans le conduit de refoulement (22) lorsque le piston (30, 31) est déplacé de la première position extrême vers la deuxième position extrême.

4. Actionneur selon l'une des revendications 1 à 3, comprenant un organe élastique de rappel (32) propre à solliciter le piston (30, 31) pour maintenir le piston (30, 31) en appui sur la surface de came (33).

5. Actionneur selon la revendication 4, dans lequel l'organe élastique de rappel (32) comprend un ressort.

6. Actionneur selon l'une des revendications 1 à 5, dans lequel le piston (30, 31) est monté mobile en translation à l'intérieur du cylindre (28, 29) selon une direction radiale par rapport à l'axe de rotation (X) du premier élément (5).

7. Actionneur selon l'une des revendications 1 à 6, dans lequel la surface de came (33) présente un rayon qui varie angulairement, avec au moins un maximum.

8. Actionneur selon la revendication 7, dans lequel la surface de came (33) présente un rayon qui varie angulairement, avec au moins deux maxima.

9. Actionneur selon l'une des revendications 1 à 8, dans lequel la surface de came (33) présente une section de forme elliptique.

10. Actionneur selon l'une des revendications 1 à 9, comprenant un nombre p de pistons (30, 31) et dans lequel la came (33) présente un rayon qui varie angulairement avec n x p maxima, n étant un nombre entier supérieur ou égal à 1.

11. Actionneur selon l'une des revendications 1 à 10, dans lequel le premier élément (5) comprend un canal (34) de circulation de fluide de lubrification s'étendant à l'intérieur du premier élément (5), le déplacement du piston (30, 31) dans le cylindre (28, 29) ayant pour effet de faire circuler le fluide de lubrification dans le canal (34) de circulation de fluide.

12. Actionneur selon la revendication 9, comprenant un réservoir (23) de fluide de lubrification agencé à l'intérieur du corps (4), pour l'alimentation en fluide de lubrification du canal (34) de circulation de fluide de lubrification.

13. Actionneur selon la revendication 12, comprenant un passage de retour de fluide entre le premier élément (5) et le deuxième élément (6) pour le retour du fluide de lubrification vers le réservoir (23).

## Patentansprüche

1. Stellantrieb (1), der umfasst:
- einen Körper (4), und
- ein erstes Element (5), das in Bezug auf den Körper (4) drehbeweglich gelagert ist, und ein zweites Element (6), das in Bezug auf den Körper (4) translatorisch beweglich gelagert ist, wobei das eine von dem ersten Element (5) und dem zweiten Element (6) eine Schraube ist und das andere von dem ersten Element (5) und dem zweiten Element (6) eine Mutter ist, wobei die Mutter dazu geeignet ist, derart mit der Schraube zusammenzuwirken, dass eine Drehung des ersten Elements (5) in Bezug auf den Körper (4) um eine Drehachse (X) eine Translation des zweiten Elements (6) in Bezug auf den Körper (4) parallel zur Drehachse (X) bewirkt,
**dadurch gekennzeichnet, dass** er ferner umfasst:
- einen Zylinder (28, 29), der in Bezug auf das erste Element (5) fest ist,
- einen Kolben (30, 31), der im Inneren des Zylinders (28, 29) zwischen einer ersten Endposition und einer zweiten Endposition translatorisch beweglich gelagert ist, und
- eine Nockenoberfläche (33), die in Bezug auf den Körper (4) fest ist und gegen die der Kolben (30, 31) derart in Auflage gehalten wird, dass eine Drehung des ersten Elements (5) in Bezug auf den Körper (4) eine translatorische Hin- und Her-Bewegung des Kolbens (30, 31) zwischen der ersten Endposition und der zweiten Endposition bewirkt.

2. Stellantrieb nach Anspruch 1, der eine Ansaugleitung (21), die in dem ersten Element (5) gebildet ist und dazu geeignet ist, den Zylinder (28, 29) mit Schmierfluid zu versorgen, und ein Ansaugventil (24) umfasst, das dazu geeignet ist, einen Schmierfluidumlauf in der Ansaugleitung (21) hin zum Zylinder (28, 29) zu erlauben, wenn der Kolben (30, 31) von der ersten Endposition in die zweite Endposition verlagert wird, und einen Schmierfluidumlauf in der Ansaugleitung (21) zu sperren, wenn der Kolben (30, 31) von der zweiten Endposition hin zu der ersten Endposition verlagert wird.

3. Stellantrieb nach einem der Ansprüche 1 und 2, der eine Ablassleitung (22), die in dem ersten Element (5) gebildet ist und dazu geeignet ist, das Schmierfluid ausgehend von dem Zylinder (28, 29) abzulassen, und ein Ablassventil (26) umfasst, das dazu geeignet ist, einen Schmierfluidumlauf in der Ablassleitung (22) ausgehend von dem Zylinder (28, 29) zu erlauben, wenn der Kolben (30, 31) von der zweiten Endposition in die erste Endposition verlagert wird, und einen Schmierfluidumlauf in der Ablassleitung (22) zu sperren, wenn der Kolben (30, 31) von der ersten Endposition hin zu der zweiten Endposition verlagert wird.

4. Stellantrieb nach einem der Ansprüche 1 bis 3, der ein elastisches Rückstellorgan (32) umfasst, das geeignet ist, den Kolben (30, 31) anzuziehen, um den Kolben (30, 31) auf der Nockenoberfläche (33) in Auflage zu halten.

5. Stellantrieb nach Anspruch 4, wobei das elastische Rückstellelement (32) eine Feder umfasst.

6. Stellantrieb nach einem der Ansprüche 1 bis 5, wobei der Kolben (30, 31) im Inneren des Zylinders (28, 29) entlang einer Richtung radial in Bezug auf die Drehachse (X) des ersten Elements (5) translatorisch beweglich gelagert ist.

7. Stellantrieb nach einem der Ansprüche 1 bis 6, wobei die Nockenoberfläche (33) einen Radius aufweist, der winklig mit mindestens einem Maximum variiert.

8. Stellantrieb nach Anspruch 7, wobei die Nockenoberfläche (33) einen Radius aufweist, der winklig mit mindestens zwei Maxima variiert.

9. Stellantrieb nach einem der Ansprüche 1 bis 8, wobei die Nockenoberfläche (33) einen Querschnitt mit elliptischer Form aufweist.

10. Stellantrieb nach einem der Ansprüche 1 bis 9, der eine Anzahl p von Kolben (30, 31) umfasst und wobei der Nocken (33) einen Radius aufweist, der winklig mit n x p Maxima variiert, wobei n eine ganze Zahl größer oder gleich 1 ist.

11. Stellantrieb nach einem der Ansprüche 1 bis 10, wobei das erste Element (5) einen Schmierfluid-Umlaufkanal (34) umfasst, der sich im Inneren des ersten Elements (5) erstreckt, wobei die Verlagerung des Kolbens (30, 31) in dem Zylinder (28, 29) die Wirkung aufweist, dass er das Schmierfluid in dem Fluidumlaufkanal (34) in Umlauf bringt.

12. Stellantrieb nach Anspruch 9, der einen Schmierfluidbehälter (23), der im Inneren des Körpers (4) angeordnet ist, zur Versorgung des Schmierfluid-Umlaufkanals (34) mit Schmierfluid umfasst.

13. Stellantrieb nach Anspruch 12, der einen Fluidrücklaufdurchgang zwischen dem ersten Element (5) und dem zweiten Element (6) für den Rücklauf des Schmierfluids hin zu dem Behälter (23) umfasst.

## Claims

1. An actuator (1) comprising:
- a body (4), and
- a first element (5) mounted movable in rotation relative to the body (4), and a second element (6) mounted movable in translation relative to the body (4), one of the first element (5) and of the second element (6) being a screw, and the other of the first element (5) and of the second element (6) being a nut, the nut being able to cooperate with the screw so that a rotation of the first element (5) relative to the body (4) around an axis of rotation (X) causes translation of the second element (6) relative to the body (4) parallel to the axis of rotation (X),
**characterized in that** it further comprises
- a cylinder (28, 29) which is stationary in relation to the first element (5),
- a piston (30, 31) mounted movable in translation inside the cylinder (28, 29) between a first end position and a second end position, and
- a cam surface (33) fixed in relation to the body (4) and against which the piston (30, 31) is urged so that rotation of the first element (5) relative to the body (4) causes a back-and-forth movement in translation of the piston (30, 31) between the first end position and the second end position.

2. The actuator according to claim 1, comprising a suction line (21) formed in the first element (5) and able to supply the cylinder (28, 29) with lubricating fluid, and a suction valve (24) able to allow circulation of the lubricating fluid in the suction line (21) toward the cylinder (28, 29) when the piston (30, 31) is moved from the first end position to the second end position, and to prevent circulation of the lubricating fluid in the suction line (21) when the piston (30, 31) is moved from the second end position to the first end position.

3. The actuator according to one of claims 1 and 2, comprising a discharge line (22) formed in the first element (5) and able to discharge the lubricating fluid from the cylinder (28, 29), and a discharge valve (26) able to allow circulation of the lubricating fluid in the discharge line (22) from the cylinder (28, 29) when the piston (30, 31) is moved from the second end position to the first end position, and to prevent circulation of the lubricating fluid in the discharge line (22) when the piston (30, 31) is moved from the first end position to the second end position.

4. The actuator according to one of claims 1 to 3, comprising an elastic return member (32) able to urge the piston (30, 31) to maintain the piston (30, 31) against the cam surface (33).

5. The actuator according to claim 4, wherein the elastic return member (32) comprises a spring.

6. The actuator according to one of claims 1 to 5, wherein the piston (30, 31) is mounted movable in translation inside the cylinder (28, 29) in a radial direction relative to the axis of rotation (X) of the first element (5).

7. The actuator according to one of claims 1 to 6, wherein the cam surface (33) has a radius which varies angularly, with at least one maximum.

8. The actuator according to claim 7, wherein the cam surface (33) has a radius which varies angularly, with at least two maxima.

9. The actuator according to one of claims 1 to 8, wherein the cam surface (33) has a cross section of elliptical shape.

10. The actuator according to one of claims 1 to 9, comprising a number p of pistons (30, 31) and wherein the cam (33) has a radius which varies angularly with n x p maxima, n being an integer greater than or equal to 1.

11. The actuator according to one of claims 1 to 10, wherein the first element (5) comprises a lubricating fluid circulation channel (34) extending inside the first element (5), the movement of the piston (30, 31) in the cylinder (28, 29) having the effect of causing the lubricating fluid to circulate in the fluid circulation channel (34).

12. The actuator according to claim 9, comprising a lubricating fluid reservoir (23) arranged inside the body (4) to supply the lubricating fluid circulation channel (34) with lubricating fluid.

13. The actuator according to claim 12, comprising a fluid return passage between the first element (5) and the second element (6) for returning the lubricating fluid to the reservoir (23).
